# EUROPÄISCHE PATENTANMELDUNG

(11) **EP 2 740 983 A1**
(43) Veröffentlichungstag der Anmeldung: **11.06.2014**
(21) Anmeldenummer: 12195459.8
(22) Anmeldetag: 04.12.2012
(51) Int. Cl.: F16L 13/14, H02K 5/20

(54) **Elektrische Maschine mit Wasserkühlung und durch plastische Verformung verbundene Wasserrohre**

(71) Anmelder: Siemens Aktiengesellschaft, 80333 München (DE)
(72) Erfinder: Grillenberger, Reiner, 91575 Windsbach (DE); Joseph, Eric, 91238 Offenhausen (DE); Koch, Dr. Thomas, 90459 Nürnberg (DE); Sindelka, Martin, 90478 Nürnberg (DE); Sprockhoff, Olaf, 90584 Allersberg (DE); Sprockhoff, Timo, 90584 Allersberg (DE)

(57) **Zusammenfassung**

Eine elektrische Maschine weist einen Stator (1) auf. Im Stator (1) sind mäanderartig Kühlwasserrohre (3) angeordnet, in denen im Betrieb der elektrischen Maschine Kühlwasser (4) strömt. Die Kühlwasserrohre (3) weisen jeweils zwei Rohrenden (5) auf, die jeweils mittels einer jeweiligen Verbindungseinrichtung (6) miteinander verbunden. Die Verbindungseinrichtung (6) umfasst einen rohrartigen Stutzen (7) und zwei Druckhülsen (8). Die Rohrenden (5) der mittels des Stutzens (7) verbundenen Kühlwasserrohre (3) sind in den Stutzen (7) eingesteckt. Zum flüssigkeitsdichten Verbinden eines Kühlwasserrohres (3) mit dem Stutzen (7) ist - ausgehend vom Kühlwasserrohr (3) - auf den Stutzen (7) eine Druckhülse(8) aufgeschoben. Der Stutzen (7) ist durch das Aufschieben de Druckhülse (8) plastisch verformt, so dass der Stutzen (7) von radial außen an das Rohrende (5) angedrückt ist und dadurch der Stutzen (7) flüssigkeitsdicht mit den Kühlwasserrohren (3) verbunden ist.

## Beschreibung

Die vorliegende Erfindung betrifft eine elektrische Maschine,
- wobei die elektrische Maschine einen Stator aufweist,
- wobei im Stator mäanderartig Kühlwasserrohre angeordnet sind, in denen im Betrieb der elektrischen Maschine Kühlwasser strömt,
- wobei die Kühlwasserrohre jeweils zwei Rohrenden aufweisen,
- wobei die einander zugewandten Rohrenden von je zwei in Strömungsrichtung des Kühlwassers aufeinanderfolgenden Kühlwasserrohren mittels einer jeweiligen Verbindungseinrichtung miteinander verbunden sind.

Wassergekühlte elektrische Maschinen sind in verschiedenen Bauformen bekannt.

So sind beispielsweise wassergekühlte elektrische Maschinen bekannt, bei denen die Kühlung in das Gehäuse integriert ist. In einem derartigen Fall kann das Gehäuse beispielsweise aus einem inneren und einem äußeren Mantel bestehen. Der innere Mantel enthält in diesem Fall eine Kühlwendel mit Trennstegen. Die Trennstege können beispielsweise ausgefräst oder angeschweißt sein. In der Kühlwendel fließt das Wasser spiralförmig um die Rotationsachse der elektrischen Maschine um.

Bei einer anderen Bauform besteht das Gehäuse ebenfalls aus zwei Teilen. Für die Führung des Kühlwassers werden auf das innere Gehäuse Teiltrennstege geschweißt. Bei dieser Ausgestaltung fließt das Kühlwasser nicht spiralförmig, sondern mäanderartig um das Gehäuse. Der Zulauf und der Ablauf des Kühlwassers befinden sich bei dieser Ausgestaltung auf derselben Seite der elektrischen Maschine.

Weiterhin sind elektrische Maschinen bekannt, bei denen das Kühlwasser in Kühlwasserrohren geführt wird. Die Kühlrohre werden entweder in das Ständerblechpaket der elektrischen Maschine eingeschoben oder von radial außen in das Ständerblechpaket eingedrückt. Bei dieser Ausgestaltung müssen die Kühlwasserrohre außerhalb des Ständerblechpakets miteinander verbunden werden.

Im Stand der Technik sind für das Verbinden der Kühlwasserrohre miteinander verschiedene Verbindungstechniken bekannt, beispielsweise Quetschverbindungen, Lötverbindungen, Schraubverbindungen und Orbitalschweißen.

Alle bekannten Verbindungsarten weisen gewisse Nachteile auf. So ist beispielsweise der Fertigungsaufwand - und hiermit verbunden auch der Qualifizierungsaufwand für das Personal - in der Regel recht erheblich. Weiterhin halten nicht alle genannten Verbindungstechniken im Betrieb oder im Fehlerfall den auftretenden Belastungen stand.

Aus der DE 10 2004 020 478 B3 ist eine Rohrverbindung bekannt. Die Rohrverbindung umfasst einen rohrartigen, zwei Stoßseiten aufweisenden Stutzen und zwei Druckhülsen. Der Stutzen ist an beiden Stoßseiten offen. Im Inneren des Stutzens sind zwei Dichtelemente angeordnet, beispielsweise O-Ringe. Die Rohrenden der mittels des jeweiligen Stutzens verbundenen Kühlwasserrohre sind an den beiden Stoßseiten in den Stutzen eingesteckt. Zum flüssigkeitsdichten Verbinden des jeweiligen Kühlwasserrohres mit dem Stutzen ist - ausgehend von dem jeweiligen Kühlwasserrohr - auf den Stutzen je eine der beiden Druckhülsen aufgeschoben. Der Stutzen ist durch das Aufschieben der Druckhülsen plastisch verformt. Dadurch werden die Dichtelemente einerseits an den Stutzen und andererseits an die Rohrenden angedrückt, so dass eine flüssigkeitsdichte Verbindung geschaffen wird.

Aus der DE 10 2004 055 537 A1 ist ebenfalls eine Rohrverbindung bekannt. Bei diesen Rohrverbindungen sind die Rohrenden der Kühlwasserrohre ineinander eingesteckt. Zum flüssigkeitsdichten Verbinden der Kühlwasserrohre miteinander ist auf das äußere Kühlwasserrohr eine Druckhülse aufgeschoben. Durch das Aufschieben der Druckhülse werden die Kühlwasserrohre plastisch verformt und dadurch aneinander angedrückt.

Aus dem Katalog "REFRIGERATION AND AIR CONDITIONING - INSTALLATION, SERVICE AND ORIGINAL EQUIPMENT" der Firma Vulkan Lokring Rohrverbindungen GmbH & Co. KG, Heerstraße 66, 44653 Herne, Deutschland, ist für Klima-und Kälteanlagen eine Verbindungseinrichtung für Rohre bekannt, die einen rohrartigen, zwei Stoßseiten aufweisenden Stutzen und zwei Druckhülsen umfasst. Der Stutzen ist an beiden Stoßseiten offen. Die Rohrenden der mittels des jeweiligen Stutzens verbundenen Kühlwasserrohre sind an den beiden Stoßseiten in den Stutzen eingesteckt. Zum flüssigkeitsdichten Verbinden des jeweiligen Kühlwasserrohres mit dem Stutzen ist - ausgehend von dem jeweiligen Kühlwasserrohr - auf den Stutzen je eine der beiden Druckhülsen aufgeschoben. Der Stutzen ist durch das Aufschieben der Druckhülsen plastisch verformt, so dass der Stutzen von radial außen an die Rohrenden angedrückt ist und dadurch der Stutzen flüssigkeitsdicht mit den Kühlwasserrohren verbunden ist.

Die Aufgabe der vorliegenden Erfindung besteht darin, eine elektrische Maschine der eingangs genannten Art derart weiter zu entwickeln, dass die Verbindungseinrichtungen auf einfache und zuverlässige Weise hergestellt werden können.

Die Aufgabe wird durch eine elektrische Maschine mit den Merkmalen des Anspruchs 1 gelöst. Vorteilhafte Ausgestaltungen der erfindungsgemäßen elektrischen Maschine sind Gegenstand der abhängigen Ansprüche 2 bis 12.

Erfindungsgemäß wird eine elektrische Maschine der eingangs genannten Art dadurch weitergebildet,
- dass die jeweilige Verbindungseinrichtung einen rohrartigen, zwei Stoßseiten aufweisenden Stutzen und zwei Druckhülsen umfasst,
- dass der Stutzen an beiden Stoßseiten offen ist,
- dass die Rohrenden der mittels des jeweiligen Stutzens verbundenen Kühlwasserrohre an den beiden Stoßseiten in den Stutzen eingesteckt sind,
- dass zum flüssigkeitsdichten Verbinden des jeweiligen Kühlwasserrohres mit dem Stutzen - ausgehend von dem jeweiligen Kühlwasserrohr - auf den Stutzen je eine der beiden Druckhülsen aufgeschoben ist und
- dass der Stutzen durch das Aufschieben der Druckhülsen plastisch verformt ist, so dass der Stutzen von radial außen an die Rohrenden angedrückt ist und dadurch der Stutzen flüssigkeitsdicht mit den Kühlwasserrohren verbunden ist.

In einer bevorzugten Ausgestaltung der vorliegenden Erfindung ist der Stutzen an seiner Außenseite in den von den Druckhülsen übergriffenen Bereichen zylindrisch ausgebildet. In diesem Fall sind die Druckhülsen an ihren Innenseiten zumindest in Teilabschnitten konisch ausgebildet.

Die Druckhülsen weisen an ihren Innenseiten in Anfangsbereichen, in denen sie zuerst auf den Stutzen aufgeschoben sind, einen ersten Durchmesser auf. Weiterhin verjüngen sich die Druckhülsen in an die Anfangsbereiche angrenzenden ersten Teilabschnitten mit einer ersten Steigung auf einen zweiten Durchmesser. Die weitergehende Ausgestaltung der Druckhülsen kann nach Bedarf sein.

Beispielsweise ist es möglich, dass die Druckhülsen in Zwischenbereichen den zweiten Durchmesser aufweisen, dass die Druckhülsen sich in zweiten Teilabschnitten mit einer zweiten Steigung auf einen dritten Durchmesser verjüngen und dass die zweite Steigung größer als die erste Steigung ist.

Alternativ ist es möglich, dass die Druckhülsen sich in an die ersten Teilabschnitte angrenzenden zweiten Teilabschnitten mit einer zweiten Steigung auf einen dritten Durchmesser verjüngen, dass die Druckhülsen sich in an die zweiten Teilabschnitte angrenzenden dritten Teilabschnitten mit einer dritten Steigung auf einen vierten Durchmesser verjüngen und dass die zweite Steigung kleiner als die erste Steigung und die dritte Steigung ist.

Wiederum alternativ ist es möglich, dass die Druckhülsen sich in an die ersten Teilabschnitte angrenzenden zweiten Teilabschnitten mit einer zweiten Steigung auf einen dritten Durchmesser aufweiten, dass die Druckhülsen sich in an die zweiten Teilabschnitte angrenzenden dritten Teilabschnitten mit einer dritten Steigung auf einen vierten Durchmesser verjüngen, dass der vierte Durchmesser kleiner als der zweite Durchmesser ist und dass die zweite Steigung kleiner als die erste Steigung und die dritte Steigung ist.

Vorzugsweise weist der Stutzen an seiner Innenseite einen Vorsprung auf. In diesem Fall können die Kühlwasserrohre mit ihren Rohrenden am Vorsprung anstoßen. Dadurch wird auf einfache Weise eine definierte Positionierung der Kühlwasserrohre relativ zum Stutzen bewirkt.

Vorzugsweise weist der Stutzen an seiner Außenseite mindestens einen Ringflansch auf. Alternativ kann der Stutzen an seiner Außenseite zwei Ringflansche aufweisen, zwischen denen eine Ringnut gebildet ist. In beiden Fällen wird dadurch das Ansetzen eines Verpresswerkzeugs erleichtert.

Die Kühlwasserrohre, die Stutzen und die Druckhülsen bestehenden vorzugsweise aus Metall oder einer Metalllegierung. Insbesondere können die Kühlwasserrohre, die Stutzen und die Druckhülsen aus demselben Metall bzw. derselben Metalllegierung bestehen. Als Material für die Kühlwasserrohre, die Stutzen und die Druckhülsen kommen beispielsweise Stahl (insbesondere Edelstahl), Aluminium, Messing oder Kupfer infrage.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine elektrische Maschine,
- FIG 2: einen Stator einer elektrischen Maschine in abgerollter Darstellung von außen,
- FIG 3: eine Verbindungseinrichtung mit zwei Kühlwasserrohren und
- FIG 4 bis 6: mögliche Ausgestaltungen von Druckhülsen.

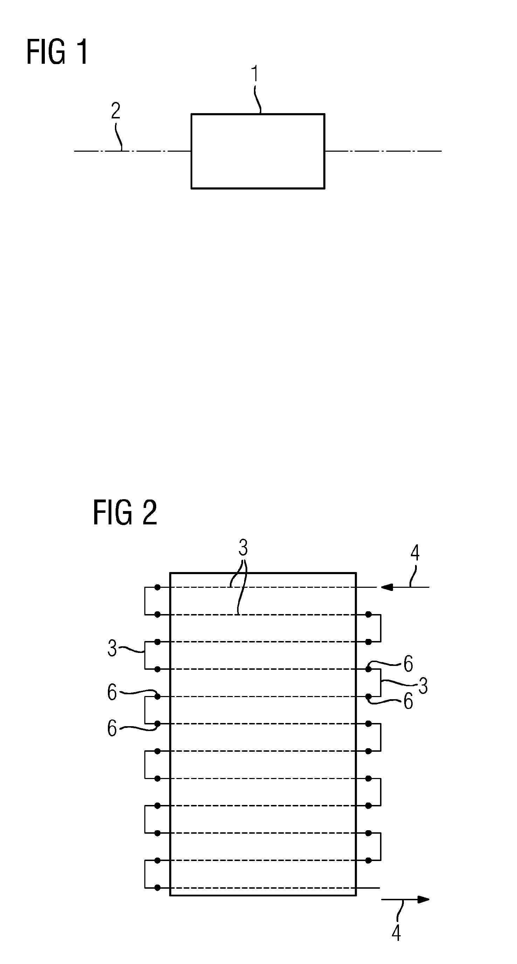

FIG 1 zeigt in völlig schematischer Darstellung eine elektrische Maschine. Die elektrische Maschine weist gemäß FIG 1 einen Stator 1 auf. Die elektrische Maschine weist weiterhin einen Rotor auf, der um eine Rotationsachse 2 rotierbar ist. Der Rotor ist in FIG 1 nicht mit dargestellt, da er im Rahmen der vorliegenden Erfindung von untergeordneter Bedeutung ist.

Soweit nachfolgend die Begriffe axial, radial und tangential verwendet werden, sind sie stets auf die Rotationsachse 2 bezogen. Der Begriff axial bedeutet eine Richtung parallel zur Rotationsachse 2. Der Begriff radial bedeutet eine Richtung orthogonal zur Rotationsachse 2 auf die Rotationsachse 2 zu oder von ihr weg. Der Begriff tangential bedeutet eine Richtung, die sowohl zur Axialrichtung als auch zur Radialrichtung orthogonal ist. Der Begriff tangential bedeutet also eine Richtung, die in konstantem radialem Abstand von der Rotationsachse 2 und bei konstanter Axialposition kreisförmig um die Rotationsachse 2 herum gerichtet ist.

Die elektrische Maschine von FIG 1 ist wassergekühlt. Im Stator 1 sind daher gemäß FIG 2 Kühlwasserrohre 3 angeordnet. Die Kühlwasserrohre 3 verlaufen innerhalb des Stators 1 im Wesentlichen axial-tangential. Die Kühlwasserrohre 3 sind mäanderartig angeordnet. Sie verlaufen also im Zickzack. In den Kühlwasserrohren 3 strömt im Betrieb der elektrischen Maschine Kühlwasser 4.

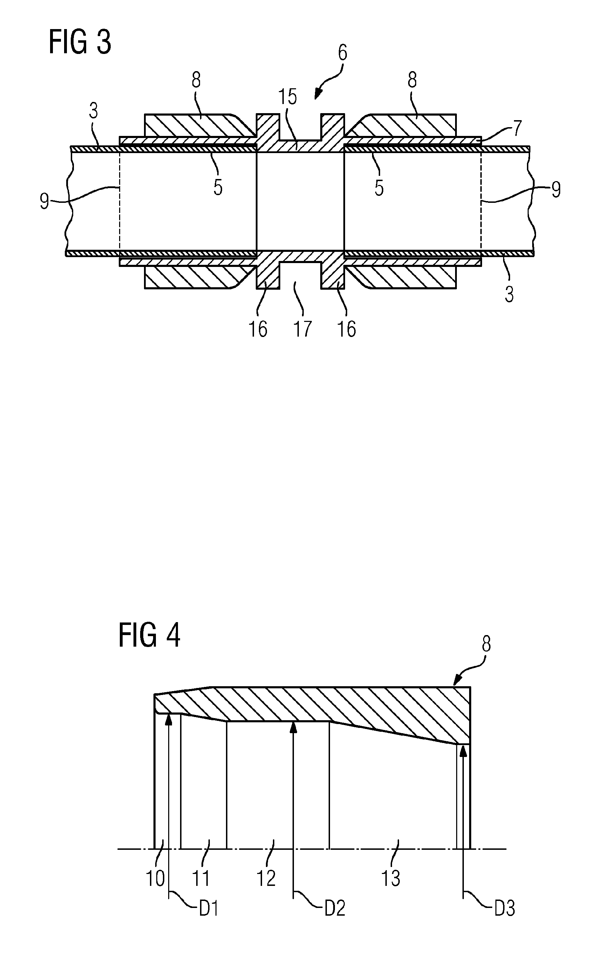

Die Kühlwasserrohre 3 weisen gemäß FIG 3 jeweils zwei Rohrenden 5 auf. Die einander zugewandten Rohrenden 5 von je zwei in Strömungsrichtung des Kühlwassers 4 aufeinanderfolgenden Kühlwasserrohren 3 sind gemäß den FIG 2 und 3 mittels einer jeweiligen Verbindungseinrichtung 6 flüssigkeitsdicht miteinander verbunden.

Gemäß FIG 3 bestehen die Rohre 3 aus geraden Abschnitten und aus U-förmigen Abschnitten. Die geraden Abschnitte sind im Bereich des Stators 1 angeordnet, die U-förmigen Abschnitte außerhalb des Stators 1. Diese Ausgestaltung ist jedoch nicht zwingend. Alternativ könnten die Rohre 3 beispielsweise längere Abschnitte umfassen, die als solche jeweils mehrere Windungen des gebildeten Mäanders umfassen, so dass nur eine deutlich reduzierte Anzahl an Verbindungseinrichtungen 6 erforderlich ist.

FIG 3 zeigt eine der Verbindungseinrichtungen 6 in detaillierter Darstellung im Schnitt. Gemäß FIG 3 weist die Verbindungseinrichtung 6 einen rohrartigen Stutzen 7 und zwei Druckhülsen 8 auf. Der Stutzen 7 weist seinerseits zwei Stoßseiten 9 auf. An beiden Stoßseiten 9 ist der Stutzen 7 offen.

Zum Herstellen der flüssigkeitsdichten Verbindung werden zunächst die Druckhülsen 8 auf die Rohrenden 5 von miteinander zu verbindenden Kühlwasserrohren 3 aufgesteckt. Sodann werden die Rohrenden 5 der miteinander zu verbindenden Kühlwasserrohre 3 von der einen und der anderen Stoßseite 9 aus in den Stutzen 7 eingesteckt. Schließlich werden - ausgehend von dem jeweiligen Kühlwasserrohr 3 - die beiden Druckhülsen 8 auf den Stutzen 7 aufgeschoben. Durch das Aufschieben der Druckhülsen 8 auf den Stutzen 7 wird der Stutzen 7 plastisch verformt. Dadurch wird der Stutzen 7 von radial außen direkt und unmittelbar an die in den Stutzen 7 eingesteckten Rohrenden 5 angedrückt. Auf diese Weise wird der Stutzen 7 flüssigkeitsdicht mit den Kühlwasserrohren 3 verbunden.

Der Stutzen 7 ist an seiner Außenseite (zumindest) in den von den Druckhülsen 8 übergriffenen Bereichen zylindrisch ausgebildet. Die Druckhülsen 8 hingegen sind an ihren Innenseiten zumindest in Teilabschnitten konisch ausgebildet. Hierbei sind verschiedene Ausgestaltungen möglich, die nachstehend in Verbindung mit den FIG 4 bis 6 näher erläutert werden. Den Ausgestaltungen der FIG 4 bis 6 ist gemeinsam, dass die Druckhülsen 8 an ihren Innenseiten in Anfangsbereichen 10, in denen sie zuerst auf den Stutzen 7 aufgeschoben sind, einen ersten Durchmesser D1 aufweisen. Weiterhin ist den Ausgestaltungen der FIG 4 bis 6 gemeinsam, dass die Druckhülsen 8 sich in ersten Teilabschnitten 11 mit einer ersten Steigung vom ersten Durchmesser D1 auf einen zweiten Durchmesser D2 verjüngen. Der zweite Durchmesser D2 also kleiner als der erste Durchmesser D1.

Gemäß der Ausgestaltung von FIG 4 grenzen an die ersten Teilabschnitte 10 Zwischenbereiche 12 an. In den Zwischenbereichen 12 weisen die Druckhülsen 8 den zweiten Durchmesser D2 auf. An die Zwischenbereiche 12 grenzen zweite Teilabschnitte 13 an. In den zweiten Teilabschnitten 13 verjüngen sich die Druckhülsen 8 mit einer zweiten Steigung vom zweiten Durchmesser D2 auf einen dritten Durchmesser D3. Die zweite Steigung ist bei der Ausgestaltung von FIG 4 größer als die erste Steigung.

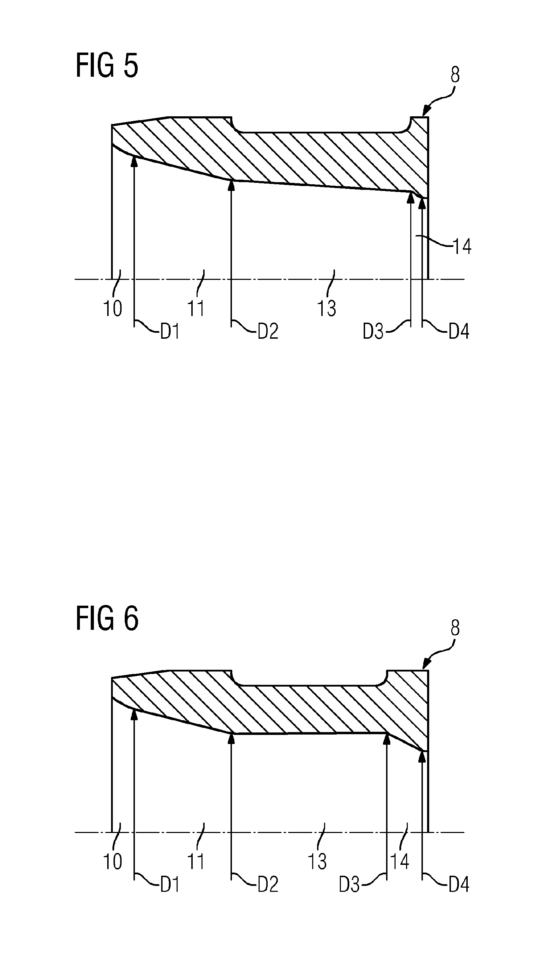

Bei der Ausgestaltung der Druckhülsen 8 gemäß FIG 5 grenzen die zweiten Teilabschnitte 13, in denen die Druckhülsen 8 sich mit der zweiten Steigung auf den dritten Durchmesser D3 verjüngen, direkt an die ersten Teilabschnitte 11 an. Bei der Ausgestaltung gemäß FIG 5 grenzen an die zweiten Teilabschnitte 13 weiterhin dritte Teilabschnitte 14 an, in denen sich die Druckhülsen 8 mit einer dritten Steigung auf einen vierten Durchmesser D4 verjüngen. Die zweite Steigung ist bei der Ausgestaltung gemäß FIG 5 die kleinste Steigung. Sie ist also sowohl kleiner als die erste Steigung als auch kleiner als die dritte Steigung.

Bei der Ausgestaltung der Druckhülsen 8 gemäß FIG 6 grenzen - analog zur Ausgestaltung der Druckhülsen 8 gemäß FIG 5 - die zweiten Teilabschnitte 13 ebenfalls direkt an die ersten Teilabschnitte 11 an. Weiterhin grenzen - ebenfalls analog zur Ausgestaltung der Druckhülsen 8 gemäß FIG 5 - die dritten Teilabschnitte 14 direkt an die zweiten Teilabschnitte 13 an. Ebenso in Analogie zur Ausgestaltung der Druckhülsen 8 gemäß FIG 5 erfolgt in den ersten Teilabschnitten 11 mit einer ersten Steigung eine Verjüngung der Druckhülsen 8 vom ersten Durchmesser D1 auf den zweiten Durchmesser D2 und erfolgt in den dritten Teilabschnitten 14 mit einer dritten Steigung eine Verjüngung der Druckhülsen 8 vom dritten Durchmesser D3 auf den vierten Durchmesser D4. Im Gegensatz zur Ausgestaltung gemäß FIG 5 erfolgt in den zweiten Teilabschnitten jedoch nicht eine Verjüngung, sondern eine Aufweitung vom zweiten Durchmesser D2 auf den dritten Durchmesser D3. Der dritte Durchmesser D3 ist bei der Ausgestaltung gemäß FIG 6 also größer als der zweite Durchmesser D2. Weiterhin ist bei der Ausgestaltung der Druckhülsen 8 gemäß FIG 6 auch der vierte Durchmesser D4 kleiner als der zweite Durchmesser D2. Schließlich ist die zweite Steigung (ergänze: betragsmäßig) kleiner als die erste Steigung und die dritte Steigung.

Das Aufpressen der Druckhülsen 8 auf den Stutzen 7 führt umso zuverlässiger zu einer flüssigkeitsdichten Verbindung der Kühlwasserrohre 3 mit dem Stutzen 7, je genauer die Rohrenden 5 der Kühlwasserrohre 3 im Stutzen 7 positioniert sind. Vorzugsweise weist der Stutzen 7 daher an seiner Innenseite einen Vorsprung 15 auf. Dadurch ist es möglich, dass die Kühlwasserrohre 3 mit ihren Rohrenden 5 am Vorsprung 15 anstoßen und dadurch exakt positioniert sind.

Zum Aufpressen der Druckhülsen 8 auf den Stutzen 7 sind erhebliche Kräfte erforderlich. Vorzugsweise weist der Stutzen 7 daher an seiner Außenseite mindestens einen Ringflansch 16 auf. Oftmals sind sogar zwei Ringflansche 16 vorhanden, zwischen denen eine Ringnut 17 gebildet ist. An den Ringflansch 16 bzw. an die Ringflansche 16 kann beispielsweise ein zangenartiges Verpresswerkzeug angesetzt werden, mittels dessen die Druckhülsen 8 auf den Stutzen 7 aufgepresst werden können.

Die Kühlwasserrohre 3, der Stutzen 7 und die Druckhülsen 8 bestehen in der Regel aus Metall oder einer Metalllegierung. In Einzelfällen kann es möglich sein, dass die Kühlwasserrohre 3, die Stutzen 7 und/oder die Druckhülsen 8 aus verschiedenen Metallen oder Metalllegierungen bestehen. In der Regel bestehen sie jedoch aus demselben Metall bzw. derselben Metalllegierung. Als Metall oder Metalllegierung für die Kühlwasserrohre 3, die Stutzen 7 und die Druckhülsen 8 kommen insbesondere (Edel-) Stahl, Aluminium, Messing oder Kupfer infrage.

In der Regel sind die Stutzen 7 gerade, so dass die beiden mittels eines der Stutzen 7 verbundenen Kühlwasserrohre 3 miteinander fluchten. Alternativ können die Stutzen 7 gebogen sein, so dass die beiden mittels eines der Stutzen 7 verbundenen Kühlwasserrohre 3 einen Winkel miteinander bilden. Der Winkel kann nach Bedarf gewählt sein. Beispielsweise kann er 30°, 45°, 60°, 90°, 120°, 135°, 150° oder 180° betragen.

Die vorliegende Erfindung weist viele Vorteile auf. Insbesondere ist auf einfache und schnelle Weise eine zuverlässige und belastbare, auch im Dauerbetrieb flüssigkeitsdichte Verbindung der Kühlwasserrohre 3 herstellbar.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine,
- wobei die elektrische Maschine einen Stator (1) aufweist,
- wobei im Stator (1) mäanderartig Kühlwasserrohre (3) angeordnet sind, in denen im Betrieb der elektrischen Maschine Kühlwasser (4) strömt,
- wobei die Kühlwasserrohre (3) jeweils zwei Rohrenden (5) aufweisen,
- wobei die einander zugewandten Rohrenden (5) von je zwei in Strömungsrichtung des Kühlwassers (4) aufeinanderfolgenden Kühlwasserrohren (3) mittels einer jeweiligen Verbindungseinrichtung (6) miteinander verbunden sind,
**dadurch gekennzeichnet,**
- **dass** die jeweilige Verbindungseinrichtung (6) einen rohrartigen, zwei Stoßseiten (9) aufweisenden Stutzen (7) und zwei Druckhülsen (8) umfasst,
- **dass** der Stutzen (7) an beiden Stoßseiten (9) offen ist,
- **dass** die Rohrenden (5) der mittels des jeweiligen Stutzens (7) verbundenen Kühlwasserrohre (3) an den beiden Stoßseiten (9) in den Stutzen (7) eingesteckt sind,
- **dass** zum flüssigkeitsdichten Verbinden des jeweiligen Kühlwasserrohres (3) mit dem Stutzen (7) - ausgehend von dem jeweiligen Kühlwasserrohr (3) - auf den Stutzen (7) je eine der beiden Druckhülsen (8) aufgeschoben ist und
- **dass** der Stutzen (7) durch das Aufschieben der Druckhülsen (8) plastisch verformt ist, so dass der Stutzen (7) von radial außen an die Rohrenden (5) angedrückt ist und dadurch der Stutzen (7) flüssigkeitsdicht mit den Kühlwasserrohren (3) verbunden ist.

2. Elektrische Maschine nach Anspruch 1,
**dadurch gekennzeichnet,**
**dass** der Stutzen (7) an seiner Außenseite in den von den Druckhülsen (8) übergriffenen Bereichen zylindrisch ausgebildet ist und dass die Druckhülsen (8) an ihren Innenseiten zumindest in Teilabschnitten (11, 13, 14) konisch ausgebildet sind.

3. Elektrische Maschine nach Anspruch 2,
**dadurch gekennzeichnet,**
**dass** die Druckhülsen (8) an ihren Innenseiten in Anfangsbereichen (10), in denen sie zuerst auf den Stutzen (7) aufgeschoben sind, einen ersten Durchmesser (D1) aufweisen und dass die Druckhülsen (8) sich in an die Anfangsbereiche (10) angrenzenden ersten Teilabschnitten (11) mit einer ersten Steigung auf einen zweiten Durchmesser (D2) verjüngen.

4. Elektrische Maschine nach Anspruch 3,
**dadurch gekennzeichnet,**
**dass** die Druckhülsen (8) in Zwischenbereichen (12) den zweiten Durchmesser (D2) aufweisen, dass die Druckhülsen (8) sich in zweiten Teilabschnitten (13) mit einer zweiten Steigung auf einen dritten Durchmesser (D3) verjüngen und dass die zweite Steigung größer als die erste Steigung ist.

5. Elektrische Maschine nach Anspruch 3,
**dadurch gekennzeichnet,**
**dass** die Druckhülsen (8) sich in an die ersten Teilabschnitte (11) angrenzenden zweiten Teilabschnitten (13) mit einer zweiten Steigung auf einen dritten Durchmesser (D3) verjüngen, dass die Druckhülsen (8) sich in an die zweiten Teilabschnitte (13) angrenzenden dritten Teilabschnitten (14) mit einer dritten Steigung auf einen vierten Durchmesser (D4) verjüngen und dass die zweite Steigung kleiner als die erste Steigung und die dritte Steigung ist.

6. Elektrische Maschine nach Anspruch 3,
**dadurch gekennzeichnet,**
**dass** die Druckhülsen (8) sich in an die ersten Teilabschnitte (11) angrenzenden zweiten Teilabschnitten (13) mit einer zweiten Steigung auf einen dritten Durchmesser (D3) aufweiten, dass die Druckhülsen (8) sich in an die zweiten Teilabschnitte (13) angrenzenden dritten Teilabschnitten (14) mit einer dritten Steigung auf einen vierten Durchmesser (D4) verjüngen, dass der vierte Durchmesser (D4) kleiner als der zweite Durchmesser (D2) ist und dass die zweite Steigung kleiner als die erste Steigung und die dritte Steigung ist.

7. Elektrische Maschine nach einem der obigen Ansprüche,
**dadurch gekennzeichnet,**
**dass** der Stutzen (7) an seiner Innenseite einen Vorsprung (15) aufweist und dass die Kühlwasserrohre (3) mit ihren Rohrenden (5) am Vorsprung (15) anstoßen.

8. Elektrische Maschine nach einem der Ansprüche 1 bis 7,
**dadurch gekennzeichnet,**
**dass** der Stutzen (7) an seiner Außenseite mindestens einen Ringflansch (16) aufweist.

9. Elektrische Maschine nach einem der Ansprüche 1 bis 7,
**dadurch gekennzeichnet,**
**dass** der Stutzen (7) an seiner Außenseite zwei Ringflansche (16) aufweist, zwischen denen eine Ringnut (17) gebildet ist.

10. Elektrische Maschine nach einem der obigen Ansprüche,
**dadurch gekennzeichnet,**
**dass** die Kühlwasserrohre (3), die Stutzen (7) und die Druckhülsen (8) aus Metall oder einer Metalllegierung bestehen.

11. Elektrische Maschine nach Anspruch 10,
**dadurch gekennzeichnet,**
**dass** die Kühlwasserrohre (3), die Stutzen (7) und die Druckhülsen (8) aus demselben Metall bzw. derselben Metalllegierung bestehen.

12. Elektrische Maschine nach Anspruch 10 oder 11,
**dadurch gekennzeichnet,**
**dass** die Kühlwasserrohre (3), die Stutzen (7) und die Druckhülsen (8) aus Stahl, Aluminium, Messing oder Kupfer bestehen.
